# EUROPEAN PATENT APPLICATION

(11) **EP 1 061 755 A1**
(43) Date of publication of application: **20.12.2000**
(21) Application number: 99810522.5
(22) Date of filing: 14.06.1999
(51) Int. Cl.: H04Q 7/32

(54) **Method and device for protecting a portable electronic apparatus against unauthorised use**

(71) Applicant: Rothenberger, Hans Jörg, 8880 Walenstadt (CH); Rothenberger, Richard, 9325 Roggwil (CH)
(72) Inventor: Rothenberger, Hans Jörg, 8880 Walenstadt (CH); Rothenberger, Richard, 9325 Roggwil (CH)
(74) Representative: Liebetanz, Michael, Dipl.-Phys.

(57) **Abstract**

The invention relates to a method for protecting a portable electronic apparatus, particularly a cellular telephone or comparable device, against unauthorised use, especially use after theft. The method comprises the steps of storing a device access code in the apparatus, requesting the entry of a code upon turning on the apparatus in a first requesting step, and comparing the code entered upon said request with the stored device access code in a first comparative step. Upon identity of the compared codes in said first comparative step the method comprises the further step of permitting access to main functions of the apparatus.

## Description

The invention relates to a method for protecting a portable electronic apparatus, particularly a cellular telephone or comparable device, against unauthorised use, especially use after theft, and furthermore relates to a device for protecting a portable electronic apparatus, particularly a cellular telephone or comparable device, against unauthorised use, with a first memory means in which a first security code is stored.

Such devices protecting against unauthorised use are known from the state of the art. Cellular phones are used in connection with so called SIM-cards (SIM = subscriber identity module), whereby the user must enter a personal identification number (PIN) stored on the SIM-card in order to enable the functioning of said cellular phone. Without entering this PIN only emergency numbers can be used. If an incorrect PIN is entered several times in a row the SIM-card is blocked for future use.

However, such a device according to the state of the art is not a sufficient measure against theft, since stolen mobile phones can be used later on by inserting a new SIM-card legally acquired from a mobile phone company. The method providing access to main functions of a cellular phone does not ensure that stolen a cellular phones are immediately useless, since the thief can easily replace the SIM-card of the rightful owner of the phone with a new SIM-card.

Therefore, it is one object of the invention to provide a better protection against theft of mobile phones. A further object of the invention is to provide a method ensuring the security of the electronic apparatus without impeding the user with more difficult procedures as known in the state of the art.

The method according to the invention is characterised by the steps of storing a device access code in the apparatus, requesting the entry of a code upon turning on the apparatus in a first requesting step, comparing the code entered upon said request with the stored device access code in a first comparative step, and whereby upon identity of the compared codes in the first comparative step the method comprises the further step of permitting access to main functions of the apparatus.

The device with a first memory means in which a first security code is stored, according to the invention is characterised in that the device comprises a second memory means within the apparatus to store a second security code and a comparing means to compare the second security code stored in the second memory means of said apparatus with an user entry to permit access to main functions of the apparatus upon identity of the compared values.

The second memory means within the apparatus is hardwired in the portable electronic apparatus, which comprises a comparing means to compare the code stored in the second memory means of said apparatus and a user entry.

The invention relates to the fact that a stolen mobile phone according to the state of the art can be used by third parties through a new legally bought SIM-card, although the rightful owner of the mobile phone will block the use of his SIM-card with notification of the theft to his mobile phone network provider. It is even possible that such a mobile phone equipment may be sold to unaware third persons since there is no possibility for them to know that said mobile phone is a stolen apparatus.

Further features and advantages of the invention can be seen from the depending claims.

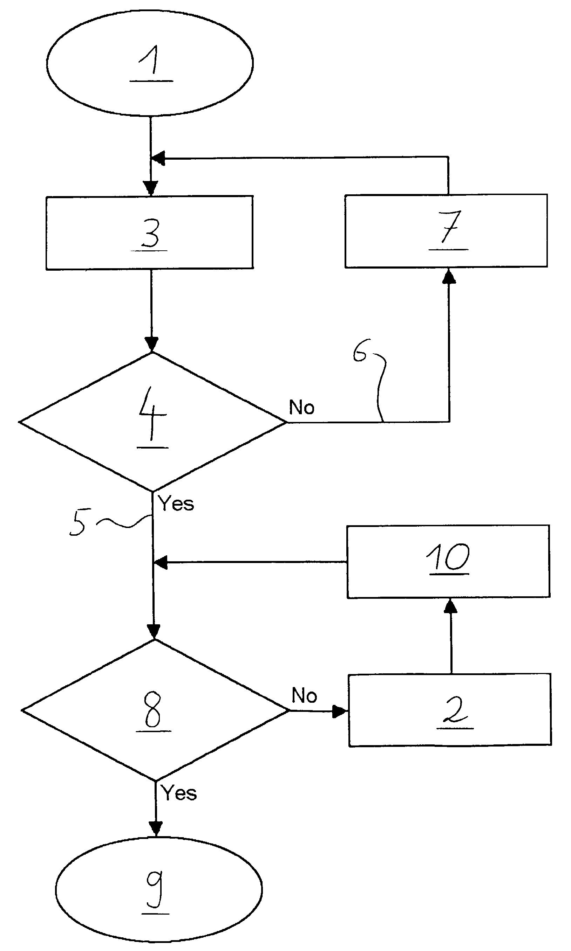

The invention will now be described more in detail on the basis of the accompanying figure representing a possible diagram how the method according to the invention works.

The basic idea of the invention is the use of an access code for the mobile phone which is device specific, i.e. the code is stored in a hard-wired element within the mobile phone. Such a device access code (in the following DAC) may be a sequence of e.g. four to six figures, which may be numbers or letters or a combination of both.

The only Fig. shows a flow chart of an embodiment of the method according to the invention. Upon turning on 1 the mobile phone it is preferably not longer necessary to enter said PIN 2 used in the state of the art, since this access code can be changed by simply changing the SIM-card within the casing of the mobile phone. Therefore the entry 2 of this PIN is either replaced by the entry 3 of the DAC or it is an additional requirement. The entry 3 of this device access code is mandatory and it should not be possible to circumvent this entry step 3 by any means. The protection of this method step may be realised by hardwiring the relating memory in a way that a replacement of this unit will be technically very difficult or at least very expensive in a way which dissuades a thief or retailer of stolen goods.

Upon entry 3 of the DAC this code is compared with the stored device access code in a first comparative step 4. Upon identity of the compared codes in the first comparative step the method comprises a further comparative step, which will be explained below.

In case of sequential entries of erroneous device access codes, i.e. an negative outcome 6 of the first comparative step, the device preferably comprises a delay means 7 which lengthens each time the time period in which the apparatus is blocked, e.g. it doubles the time period. After the first erroneous try the device permits the entry 3 of a new code after e.g. 30 seconds. The second error leads to one minute, the third error to two minutes and the tenth error therefore to a blocked state for over four hours (256 minutes).

Another possibility of protecting the DAC against brute force hacking is a counter which increments after each error and blocks every further entry after a predetermined number of errors, e.g. 3 or 8.

Within a newly sold apparatus the device access code (DAC) as set by the factory is stored within the apparatus and furthermore a stored security code, which simulates a PIN, as simple as 0000. Upon successful entry of the DAC the device compares 8 the stored security code with the PIN stored on the SIM-card. Since the PIN stored on the SIM-card will probably not have this code, the user is prompted 2 to enter the PIN of the SIM-card. Only upon identity of both codes the device will permit access to main functions of the apparatus 9.

In all subsequent uses, the entry of the DAC triggers the delivery 10 of the stored security code (PIN) for comparison or triggers the examination of a flag, indicating the former correct identification of the PIN. If for any reasons the PIN is not longer valid, e.g. exchange of the SIM-card, the user is asked to enter the new PIN, in order to get access to the main functions of the apparatus.

According to another preferred embodiment (not shown in the Fig.) the fact of a first successful entry of both the DAC and the PIN is stored within the device, e.g. within a flag. Upon any subsequent turning on the correct entry of the DAC code triggers the automatic entry of the PIN of the SIM-card so that the user does not see any difference in handling the security of the device. In case of a change of the PIN by the user or in case of a change of the SIM-card, the result of this automatic entry of the PIN will result in an error which deletes said flag. Then in addition to the DAC the new PIN must be supplied by the user.

The DAC should not be detectable or calculable from any technical number of the device as e.g. a serial number.

Furthermore it may be possible for the user to change the DAC upon entry of the right DAC, but preferably any further change of the DAC requires the entry of the original or factory DAC. This provides the possibility to the manufacturer of the device to help owners of the device who have forgotten the DAC changed by them or forgotten the original DAC or destroyed the relating information sold together with the device, in a very easy way since the manufacturer can maintain a database with the original factory DAC of sold mobile phones.

The method according to the invention may be readily implemented within known mobile phones using an additional circuit or preferably by amendment of the firmware within the micro processor of known mobile phones. It is also possible to provide a combination of additional hardware in form of logical circuitry and amendments of the program routines within the firmware to achieve the functionality of the device according to the invention.

It is preferable that emergency calls may be launched independently from the entry of a correct DAC and even without presence of a SIM-card.

The device access code should not be shorter than four places and may contain any combination of numbers and letters.

It is possible to request the entry of the DAC only upon entry of a new SIM-card. Upon normal turning on of the apparatus only the PIN is required as is the case on a cellular phone according to the state of the art. This approach has the disadvantage that PINs can be read out of SIM-cards, so that transferring the original PIN of another, legally acquired, SIM-card to the PIN of the DAC-protected device can circumvent the protection. At least a stolen apparatus such as a cellular phone can not be sold to an aware user who knows that the cellular network provider delivers with every new contract a hidden PIN which is not known to the retailer.

It is preferred that the correct entry of the DAC triggers the delivery of the PIN of a SIM-card, since this approach can also be used directly with mobile phones which can handle two (or more) SIM-cards. In this case the choice for activating a SIM-card out of several is done after entry of the DAC in order to enable the device to deliver the right PIN for the second comparison. This solution requires more memory elements, one for each PIN of the alternately used SIM-cards.

## Claims

1. A method for protecting a portable electronic apparatus, particularly a cellular telephone or comparable device, against unauthorised use, especially use after theft, whereby the method is characterised by the following steps
- storing a device access code in the apparatus,
- requesting the entry of a code upon turning on the apparatus in a first requesting step,
- comparing the code entered upon said request with the stored device access code in a first comparative step, and
whereby upon identity of the compared codes in the first comparative step the method comprises the further step of
- permitting access to main functions of the apparatus.

2. Method for protecting a portable electronic apparatus, wherein an electronic identification card can be inserted in the electronic apparatus and a security code is stored on said identification card, according to claim 1, wherein upon a first turning on of the apparatus after introduction of said identification card the method comprises the following additional steps, which are performed upon identity of the compared codes after the first comparative step
- requesting the entry of a code of said identification card in a second requesting step,
- comparing the code entered upon request with said security code in a second comparative step,
whereby upon identity of the compared codes in the second comparative step the method comprises the further steps of
- storing a flag within the portable electronic apparatus to notify the apparatus on each subsequent turning on with the same identification card that the steps upon a first turning on of the apparatus had been performed, and
- permitting access to main functions of the apparatus.

3. Method for protecting a portable electronic apparatus, wherein an electronic identification card is insertable in the electronic apparatus and a security code is stored on said identification card and wherein a second access code is stored within the portable electronic apparatus, according to claim 1, wherein the method comprises the following additional steps, which are performed upon identity of the compared codes after the first comparative step
- retrieving the second access code stored within the portable electronic apparatus,
- comparing the stored second access code with said security code in a second comparative step,
whereby upon identity of the compared codes in the second comparative step the method comprises the further step of
- permitting access to main functions of the apparatus, whereby upon lack of identity of the compared codes in the second comparative step the method comprises the further steps of
- requesting the entry of a code of said identification card in a second requesting step,
- comparing the code entered upon request with said security code in a repeated second comparative step,
whereby upon identity of the compared codes in the repeated second comparative step the method comprises the further steps of
- storing the security code as second access code within the portable electronic apparatus, and
- permitting access to main functions of the apparatus.

4. Method for protecting a portable electronic apparatus according to any one of claims 1 to 3, characterised in that upon lack of identity of the compared codes in the first and/or the second and/or the repeated second comparative step the method goes back and repeats the corresponding requesting step.

5. Method for protecting a portable electronic apparatus according to claim 4, characterised in that upon sequential lack of identity in the first and/or the second and/or the repeated second comparative step the method immediately introduces a waiting step which incrementally delays the prompting for the next entry.

6. A device for protecting a portable electronic apparatus, particularly a cellular telephone or comparable device, against unauthorised use, especially against use after theft, with a first memory means in which a first security code is stored, characterised in that the device comprises a second memory means within the apparatus to store a second security code and a comparing means to compare the second security code stored in the second memory means of said apparatus with an user entry to permit access to main functions of the apparatus upon identity of the compared values.

7. Device according to claim 6, within which the second memory means is hardwired in the portable electronic apparatus.

8. Device according to claim 6 or 7, characterised in that the device comprises a delay means, which delays a requested user entry upon lack of identity in a foregoing unsuccessful comparison performed by the comparing means.
